# EUROPEAN PATENT SPECIFICATION

(11) **EP 1 317 843 B1**
(45) Date of publication and mention of the grant of the patent: **08.06.2016**
(21) Application number: 01974236.0
(22) Date of filing: 07.09.2001
(51) Int. Cl.: H04L 29/06, H04N 7/00

(54) **INFORMATION MANAGEMENT UNIT AND METHOD THEREFOR**
VORRICHTUNG UND VERFAHREN ZUR INFORMATIONSVERWALTUNG
UNITÉ ET PROCÉDÉ DE GESTION DE L'INFORMATION

(30) Priority: 08.09.2000 GB 0022093
(43) Date of publication of application: 11.06.2003
(73) Proprietor: Google Technology Holdings LLC, Mountain View, CA 94043 (US)
(72) Inventor: ROBINSON, William, Neil, Farnham, Surrey GU9 9ED (GB)
(74) Representative: Boult Wade Tennant
(86) International application number: PCT/EP2001/010395
(87) International publication number: WO 2002/021786

(56) References cited:
- US-A- 6 064 666

## Description

### Field of the Invention

The present invention relates to an information management unit of the type used in devices in an information circuit, for example, a service terminator unit, a satellite television service network provider, a mobile terminal and a cellular communication network service provider. The present invention also relates to a method of enabling at least one of the devices to operate in the information circuit.

### Background of the Invention

In the field of providing digital broadcast services, for example, video-on-demand, it is known for a subscriber to be provided with a service terminator unit, for example, a "set-top box", for coupling to a television. The set-top box is supplied to the subscriber by a digital broadcast service provider, for example, satellite television companies or cable television companies. The digital broadcast service provider, in conjunction with other organisations, is able to provide more diverse services to the subscriber, for example, on-line banking services or interactive television such as interactive game shows. However, a precondition of some digital broadcast service providers to receiving services forming part of a subscription is that the subscriber must maintain a connection between the set-top box and a network terminator point of a fixed land-line, for example, of a Public Switched Telecommunication Network (PSTN) service provided by a wireline telecommunications service provider. The connection of the set top box to the network terminator point of the PSTN enables a call to be established between the digital broadcast service provider and the set-top box. The precondition is made for a number of reasons, including: providing information of value for marketing purposes to the digital broadcast service provider, updating software in the set-top box, and providing a return communications path between the set-top box and the digital broadcast service provider.

The document US6064666, 16th May 2000 (05/16/2000), discloses an apparatus and means enabling a user to operate across multiple service domains using a single identifier, ID. A Cross Service Association Domain mapping system is used to allow the desired identifier and common user integration. A user is able to employ a single appropriate ID to access any of a plurality of services.

### Summary of the Invention

According to a first aspect of the present invention, there is provided a management unit apparatus as claimed in claim 1.

Preferably, the record management means is arranged to receive information relating to the service and create the service record corresponding to the service.

Preferably, the record management means is arranged to create the partner identity record corresponding to a second device.

Preferably, the record management means is arranged to create a second partner identity record in response to a request to communicate from a third device in the information circuit.

The record management means may be arranged to receive authentication information from the third device. The record management means may be arranged to update the second partner identity record in response to the authentication information.

The record management means may be arranged to update the service record in response to an instruction to deliver the service.

Preferably, the first device is arranged to receive an authentication challenge from the second device.

More preferably, the first device is arranged to process the authentication challenge in order to provide an authentication result for transmission to a wireless communication apparatus. Very preferably, the wireless communications apparatus is arranged to transmit the result to the second device.

Preferably, the management unit as claimed further comprises download means for downloading processing instructions to the first device.
According to a second aspect of the present invention, there is provided a communication apparatus comprising the management unit apparatus as set forth hereinabove.

According to third aspect of the present invention, there is provided a service terminator unit comprising the management unit apparatus as set forth hereinabove.

According to a fourth aspect of the present invention, there is provided a satellite broadcast network comprising the management unit apparatus as set forth hereinabove.

According to a fifth aspect of the present invention, there is provided a cable broadcast network comprising the management unit apparatus as set forth hereinabove.

According to a sixth aspect of the resent invention, there is provided a method of enabling a first device for operation in an information show path of an information delivery system as recited in claim 17 of the accompanying claims.

Preferably, the method further comprises the step of creating a second partner identity record in response to a request to communicate from a third device.

Preferably, the method further comprises the step of receiving authentication information from the third device with which the first device needs to communicate. More preferably, the method further comprises the step of updating the second partner identity record in response to the authentication information.

Preferably, the method further comprises the step of updating the service record in response to an instruction to deliver the service.

Preferably, the step of authenticating the first device further comprises the step of: transmitting an authentication challenge from the second device to the first device.

Preferably, the step of authenticating the first device further comprises the step of: processing the authentication challenge in order to provide the authentication result, and transmitting the authentication result to a wireless communication apparatus. More preferably the wireless communication apparatus transmits the authentication result to the second device.

Preferably, the method further comprises the step of downloading processing instructions to the first device. More preferably, the first device is a communications apparatus.

According to a seventh aspect of the present invention, there is provided a computer program element comprising computer program code means to make a computer execute the method as set forth hereinabove.

Preferably, the computer program element is embodied on a computer readable medium.

It is thus possible to provide a digital information delivery system and method therefor capable of enabling the subscriber to receive digital information services at a location remote from a domicile of the subscriber using service terminating hardware not necessarily owned by the subscriber. Also, the subscriber is not limited to a single telecommunications service provider. Hence, the subscriber is provided with greater choice and flexibility.

### Brief Description of the Drawings

At least one embodiment of the invention will now be described, by way of example only, with reference to the accompanying drawings, in which:
**Figure 1** is a schematic diagram of a communication system, shown in part, for use with an embodiment of the invention;
**Figure 2** is a schematic diagram of an information delivery system;
**Figure 3** is a schematic diagram of a communication terminal shown in Figure 2;
**Figure 4** is a schematic diagram of a service terminator unit shown in Figure 2;
**Figure 5** is a schematic diagram of an input/output device shown in Figure 2;
**Figures 6 and 7** are schematic diagrams of processor units shown in Figures 3 and 4 respectively;
**Figure 8** is a schematic diagram of a server of a digital broadcast network transmitter station shown in Figure 1;
**Figures 9****,** **10 and 11** are schematic diagrams of service management units of

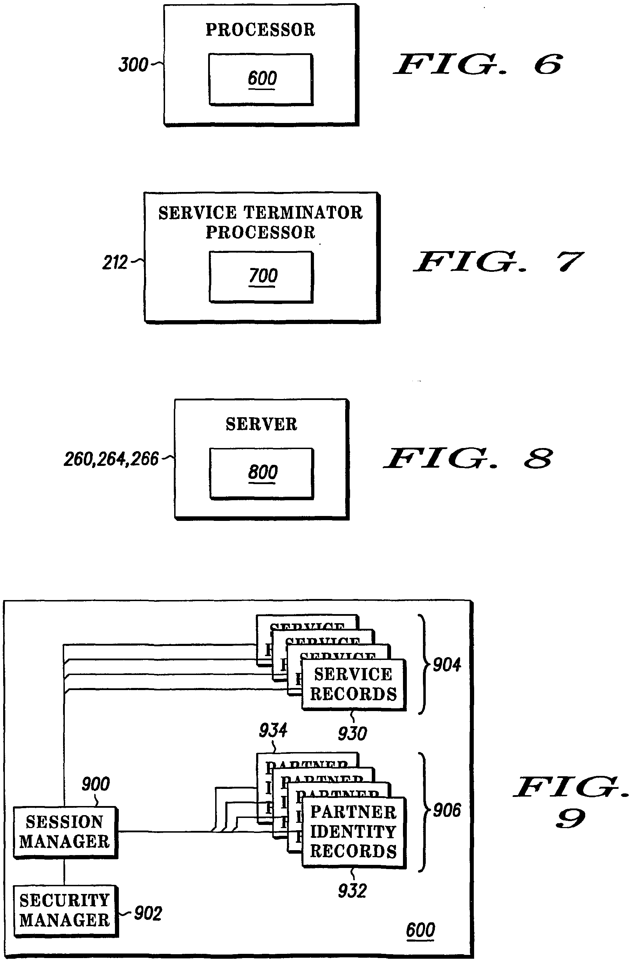

Figure 6, 7 and 8, respectively constituting an embodiment of the invention;

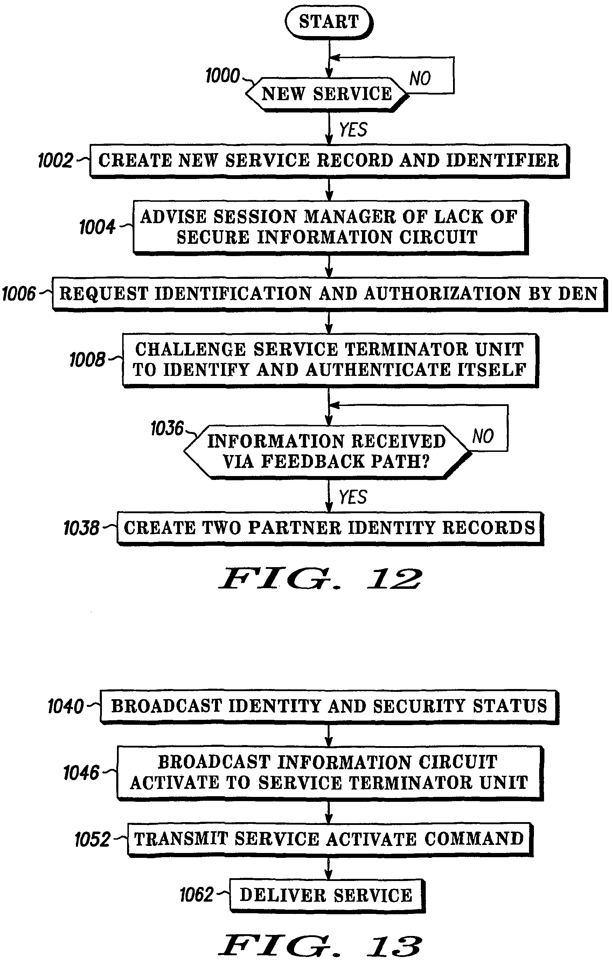

**Figure 12 and 13** are flow diagrams of operation of the server of Figure 8 in accordance with the embodiment;

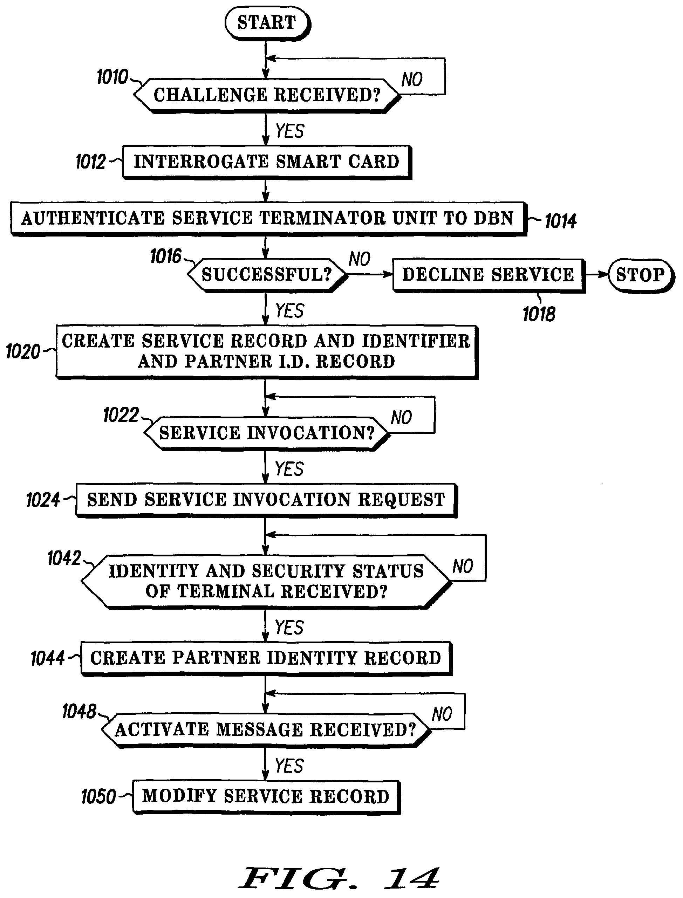

**Figure 14** is a flow diagram of operation of the processor unit of Figure 7 in accordance with the embodiment, and

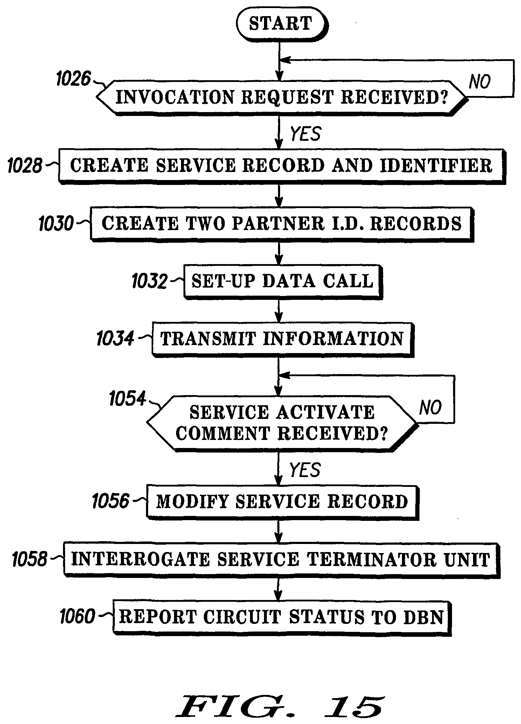

**Figure 15** is a flow diagram of operation of the processor unit of Figure 6.

Throughout the following description, identical reference numerals will be used to identify like parts.

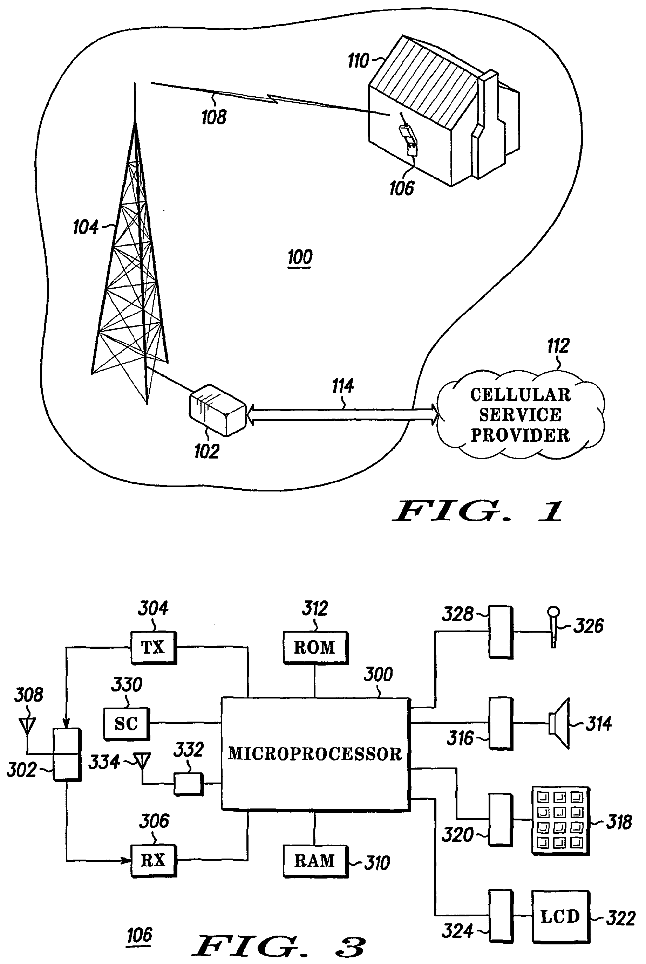

A cell 100 (Figure 1) in a cellular communication network (not shown) is supported by a base station 102, the base station 102 being coupled to an antenna 104. The base station 102 is capable of communicating with a mobile terminal 106 via a Radio Frequency (RF) communications link 108. The mobile terminal 106 is located, for example, in a domicile 110 of a cellular communication subscriber associated with the mobile terminal 106.

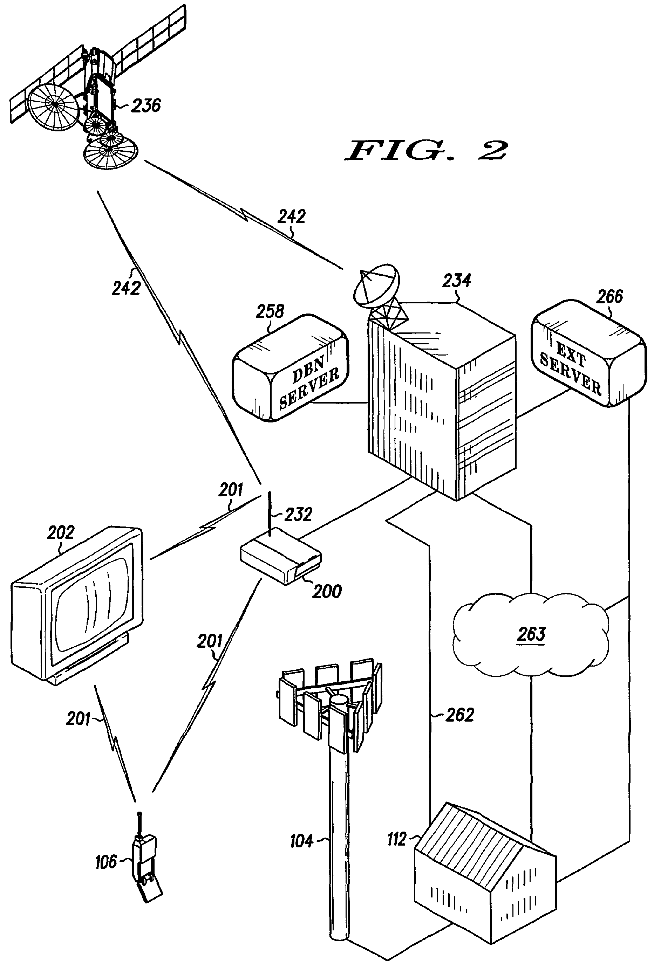

Referring to Figure 2, the base station 102 is coupled to a cellular communication network service provider 112 via the cellular communication network. The cellular communication network service provider 112 is coupled to a digital broadcast network transmitter station 234 by a dedicated communication link 262. Optionally, the cellular communication network service provider 112 is coupled to the digital broadcast network transmitter station 234 via a transit network 263.

Referring to Figure 3, the mobile terminal 106 comprises a mobile terminal processor unit 300, coupled to a duplexer 302 via a transmitter circuit 304. The mobile terminal processor unit 300 is also coupled to the duplexer 302 via a receiver circuit 306, the duplexer 302 being coupled to a first mobile terminal antenna 308. A mobile terminal volatile memory unit 310, for example, Random Access Memory (RAM) and a mobile terminal non-volatile memory unit 312, for example, Read Only Memory (ROM) are coupled to the mobile terminal processor unit 300. A loudspeaker 314 is coupled to the mobile terminal processor unit 300 via a loudspeaker driver unit 316. Similarly, a mobile terminal input device, for example, a keypad 318, is coupled to the mobile terminal processor unit 300 via a mobile terminal input device driver unit 320. A mobile terminal output device 322, for example, a Liquid Crystal Display (LCD), is coupled to the mobile terminal processor unit 300 via a mobile terminal display driver unit 324. A microphone 326 is also coupled to the mobile terminal processor unit 300 via a microphone driver unit 328. The mobile terminal 106 also comprises a mobile terminal smart card 330 containing subscription information relating to the cellular communication network service provider 112. A second mobile terminal antenna 334 is also coupled to the mobile terminal processor unit 300 via a mobile terminal RF unit 332 so as to enable the mobile terminal 106 to communicate in a Wireless Local Area Network (LAN) 201, enabled by, for example, a Bluetooth Standard, of the Institute of Electrical and Electronic Engineers (IEEE) 802.11 b Standard or the Infrared Data Association (IrDA) Standard. It should, however, be appreciated that the functionality of the mobile terminal RF unit 332 can be integrated into the transmitter circuit 304 and the receiver circuit 306, and the second mobile terminal antenna 334 can be integrated into the first mobile terminal antenna 308, if required. The mobile terminal 106 can be any suitable terminal, for example, a cellular telephone handset, such as a Bluetooth enabled Motorola® Timeport™ cellular telephone handset suitably adapted to operate in accordance with this example.

Although this example has been described in the context of mobility, i.e. the mobile terminal 106, it should be appreciated that the present invention is not limited to terminals that are mobile, and fixed (wireless) terminals can also be used. Additionally, although the cellular communication network (described above) has been used, any known wireless communications network can be employed. Hence, the mobile terminal 106 can be arranged to operate in any suitable communications network, including: a Global System for Mobile communications (GSM) network, a cdmaOne network, an iDEN (Integrated Digitally Enhanced Network), a TErrestrial TRunked Access (TETRA) network, a Personal Digital Cellular (PDC) network, a cdma2000 network or a Wideband-Code Division Multiple Access/Universal Mobile Telecommunication System (W-CDMA/UMTS) network or other similar networks.

A service terminator unit 200 (Figure 2), for example, a "set-top box" for a digital satellite broadcast television system is provided in the domicile 110. Alternatively, the service terminator unit 200 can be for use with any other information delivery system, for example, a hybrid fibre coaxial digital broadcast television system, or a terrestrial television broadcast system.

The service terminator unit 200 is coupled to an input/output (I/O) device 202, for example, a television. Alternatively, the I/O device 202 can be combined with the service terminator unit 200 to form a single unit. It should be recognised and appreciated that instead of the I/O device 202, a device capable of output alone can be employed, for example, a Visual Display Unit (VDU).

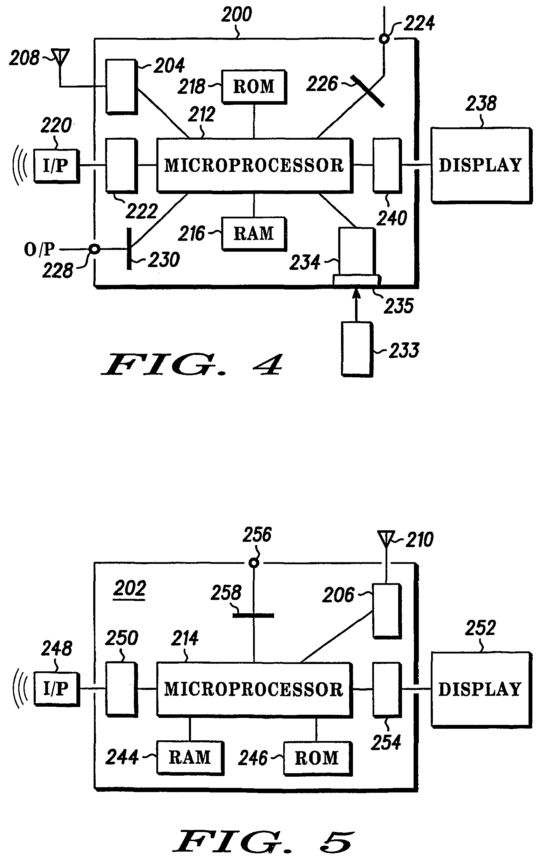

Referring to Figure 4, the service terminator unit 200 is provided with a first RF unit 204, the first RF unit 204 being coupled to a first antenna 208 and a service terminator processor unit 212. The first RF unit 204 and the first antenna 208 are used for communicating in the Wireless Local Area Network (LAN) 201. The service terminator processor unit 212 is coupled to: a service terminator volatile storage unit 216, for example, RAM; a service terminator non-volatile storage unit 218, for example, ROM; and a service terminator unit input device, for example, a keypad 220 via a keypad driver 222. A service terminator unit input terminal 224 is coupled to the service terminator processor unit 212 via a service terminator input terminal interface unit 226, the service terminator input terminal 224 being coupled to a microwave dish 232 (Figure 2) for receiving signals from the digital broadcast network transmitter station 234 via a satellite 236.

Although the service terminator unit 200, as described above, is coupled to the microwave dish 232 for receiving signals from the digital broadcast network transmitter station 234 via the satellite 236, it should be understood that other communications techniques can be employed to establish a communication link 242 between the digital broadcast network transmitter station 234 and the service terminator unit 200, for example and not limited to, a line-of-sight microwave link, a fibre-optic cable link , a coaxial cable link or a combination thereof.

Optionally, the service terminator unit 200 is provided with a display unit 238, for example, a Light Emitting Diode (LED) display coupled to the service terminator processor unit 212 via a service terminator display driver unit 240. A service terminator unit output port 228 is also coupled to the service terminator processor unit 212 via a service terminator output port driver unit 230.

A smart card 233 is insertable into a smart card reader unit 237 via a slot 235. Instead of, or in addition to, the smart card 233 and the smart card reader unit 237, any known data carrier capable of carrying subscription information relating to a digital broadcast network subscriber can be used. The subscription information relating to the digital broadcast network subscriber includes digital broadcast network subscriber identification and authentication information.

Referring to Figure 5, the I/O device 202 comprises an I/O device processor unit 214 coupled to an I/O device volatile memory unit 244, for example, RAM and an I/O device non-volatile memory unit 246, for example, ROM. The I/O device processor unit 214 is also coupled to an infra-red receiver 248 for communication with a remote controller unit (not shown), the infra-red receiver 248 being coupled to the I/O device processor unit 214 via an infra-red receiver driver 250. An output unit 252, for example, a Cathode Ray Tube (CRT) is also coupled to the I/O device processor unit 214 via an I/O device display driver unit 254.

An I/O device input port 256 is coupled to the I/O device processor unit 214, via an I/O device input port interface unit 258, for receiving signals from the service terminator unit output port 228. A second RF unit 206 is coupled to the I/O device processor unit 214 and a second antenna 210 for enabling communications in the wireless LAN 201.

Although the service terminator unit 200, the I/O device 202 and the mobile terminal 106 are provided with the first, second and mobile terminal RF units 204, 206, 332 respectively, for operation, for example, in accordance with the Bluetooth standard, other wireless communications hardware/software can be employed in order to enable local area communications between the service terminator unit 200, the I/O device 202 and the mobile terminal 106 in accordance with any communications standard or technique required, for example the IEEE 802.11 b Standard or IrDA Standard.

Although, in this example, the first RF unit 204 and the first antenna 208 are part of the service terminator unit 200, it should be appreciated that the first RF unit 204 and the first antenna 208 can be packaged separately and coupled to the service terminator unit 200. Similarly, the second RF unit 206 and the second antenna 208 can be packaged separately from the I/O device 202. Additionally, although the service terminator unit 200 is arranged to receive the smart card 500, the provision of the smart card 500 is not essential and the functionality of the smart card can be integrated, for example, into the functionality of the service terminator processor unit 212.

Information flow from the digital broadcast network transmitter station 234 to the service terminator unit 200, between the service terminator unit 200 and the mobile terminal 106, between the mobile terminal 106 and the cellular communication network service provider 112, and between the cellular communication network service provider 112 and the digital broadcast network transmitter station 234 constitutes an information circuit. Information flowing from the service terminator unit 200 to the digital broadcast network transmitter station 234 via the mobile terminal 106 and the cellular communication network service provider 112 constitutes an information feedback, or return, path. In order to co-ordinate correct delivery of services to the digital broadcast network subscriber via the service terminator unit 200, the digital broadcast network transmitter station 234 comprises a digital broadcast network server 258 (Figure 1), the digital broadcast network server 258 supporting a Digital Broadcast Network (DBN) service manager unit 800 (Figure 8). Similarly, the mobile terminal processor unit 300 supports a mobile terminal service manager unit 600 (Figure 6) and the service terminator processor unit 212 supports a service terminator service manager unit 700 (Figure 7).

Referring to Figure 9, the mobile terminal service manager unit 600, comprises a mobile terminal session manager unit 900 coupled to a mobile terminal security manager unit 902. The mobile terminal session manager unit 900 is capable of creating, storing, modifying, retrieving and deleting at least one mobile terminal service record 904, the at least one mobile terminal service record 904 corresponding to at least one available service. The mobile terminal session manager unit 900 is also capable of creating, storing, modifying, retrieving and deleting at least one mobile terminal partner identity record 906 comprising an identity of a partner device to the mobile terminal 106 and an associated status of the partner device to the mobile terminal 106.

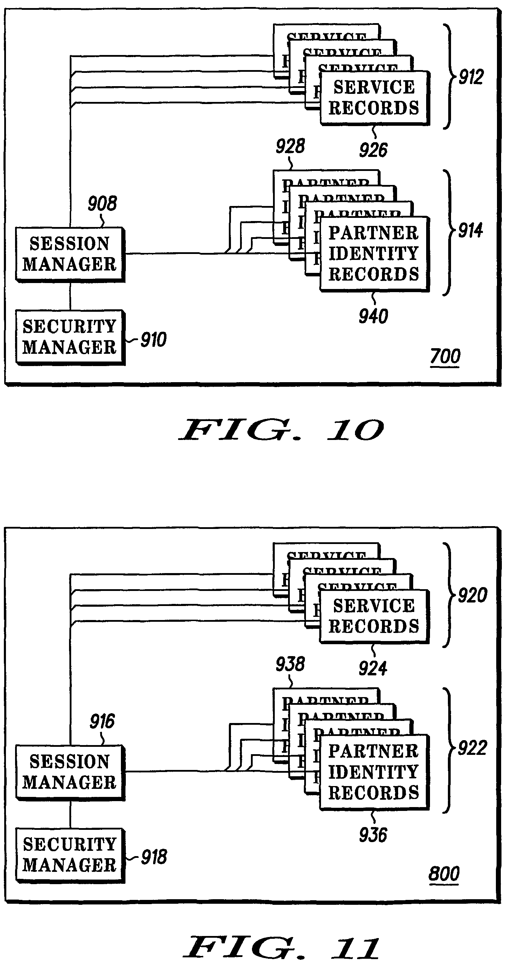

The service terminator service manager unit 700 (Figure 10) comprises a service terminator session manager unit 908 coupled to a service terminator security manager unit 910. The service terminator session manager unit 908 is capable of creating, storing, modifying, retrieving and deleting at least one service terminator service record 912 corresponding to the at least one available service. The service terminator service manager unit 908 is also capable of creating, storing, modifying, retrieving and deleting at least one service terminator partner identity record 914 comprising an identity of a partner device to the service terminator unit 200 and an associated status of the partner device to the service terminator unit 200.

Referring to Figure 11, the DBN service manager unit 800 comprises a DBN session manager unit 916 coupled to a DBN security manager unit 918. The DBN session manager unit 916 is capable of creating, storing, retrieving and deleting at least one DBN service record 920 corresponding to the at least one available service. The DBN session manager unit 916 is also capable of creating, storing, retrieving and deleting at least one DBN partner identity record 922 comprising an identity of a partner device to the digital broadcast network transmitter station 234 and an associated status of the partner device to the digital broadcast network transmitter station 234.

The mobile terminal session manager unit 900, the service terminator session manager unit 908 and the DBN session manager unit 916 are responsible for identifying and associating the partner devices and the at least one available service in a secure manner, the partner devices being defined as entities forming part of the information circuit. Consequently, the mobile terminal session manager unit 900, the service terminator session manager unit 908 and the DBN session manager unit 916 correlate partner identity records with service records as appropriate, subject to information provided by the mobile terminal security manager unit 902, the service terminator security manager unit 910 and the DBN security manager unit 918, respectively or any human input or another source, for example, a human operator or a custom security server (not shown) coupled to the cellular communication network (not shown) for managing digital broadcast network service privileges.

The mobile terminal security function manager unit 902, the service terminator security manager unit 910 and the DBN security manager unit 918 are responsible for ensuring that appropriate security algorithms are being, and have been, run. The security manager units 902, 910, 918 are arranged to perform a security co-ordination function. The cellular communication network service provider 112 has proprietary subscriber identification, authentication and user data encryption algorithms. Similarly, the digital broadcast network uses proprietary subscriber identification, authentication and user data encryption algorithms different from those used by the cellular communication network service provider 112. Consequently, there is a need to co-ordinate security functions carried out by the digital broadcast network and the cellular communication network service provider 112. The security manager units 902, 910, 918 only have information relating to proprietary security algorithms for devices in which the security manager units 902, 910, 918 are respectively disposed. The security manager units 902, 910, 918 act as gatekeepers for the provision of services, i.e. only devices fulfilling minimum subscriber identification, authentication and user data encryption requirements, i.e. minimum security requirements, are permitted by the security manager units 902, 910, 918 to participate in a given service co-ordinated across the digital broadcast network and the cellular communication network. If the minimum security requirements are not met by one or more of the devices needed to support the given service, the session manager unit, comprising the security manager unit, that has refused to authenticate the device is instructed by the security manager unit to prevent exchange of service related data between the device in question and other devices.

In operation (Figure 12), the DBN session manager unit 916 determines (step 1000) whether a new service is available. If the new service is available, the DBN session manager unit 916 creates (step 1002) a first DBN service record 924 corresponding to the new service comprising at least a new service identifier and a state of the new service. The new service identifier is used to identify the new service and can be used as an index to access specific DBN service records. The state of the new service can include, but is not limited to, active, inactive, starting-up and terminating. The DBN security manager unit 918, responsible for ensuring that appropriate security algorithms are being, and have been, run, then indicates to the DBN session manager unit 916 that a secure information circuit has not been established (step 1004). Consequently, the DBN session manager unit 916 sends a request to the digital broadcast network transmitter station 234 to identify and authenticate (step 1006) the digital broadcast network subscriber.

In response to the request (step 1006) from the DBN session manager unit 916, the digital broadcast network transmitter station 234 transmits (step 1008) an identification and authentication challenge to the service terminator unit 200. The identification and authentication challenge is accompanied by the new service identifier created above, an identity of the DBN service manager unit 600 also being broadcast to the service terminator unit 200.

In response (Figure 14), the service terminator unit 200, awaiting (step 1010) the identification and authentication challenge, interrogates (step 1012) the smart card 233 inserted into the service terminator unit 200. The interrogation (step 1012) causes the identity of the subscriber and appropriate digital broadcast network subscriber authentication keys and responses to be exchanged between the smart card 233 and the service terminator processor unit 212. The service terminator security manager unit 910 also controls (step 1014) an execution of appropriate service terminator unit proprietary authentication algorithms. The service terminator security manager unit 910 then determines (step 1016) whether the execution of the appropriate service terminator proprietary algorithms has resulted in the digital broadcast network subscriber being successfully authenticated. If the digital broadcast network subscriber is not authenticated, the service terminator security manager unit 910 instructs the service terminator session manager unit 908 to inform the service terminator processor unit 212 that the digital broadcast network subscriber has not been authenticated and to decline (step 1018) the provision of the new service or a set of services.

If the digital broadcast network subscriber is successfully authenticated, the service terminator session manager unit 908 creates (step 1020) a service terminator service record 926 with a service terminator identifier (not shown), the service terminator identifier being the same as, or different from but with a known correspondence to, the new service identifier created by the DBN session manager unit 916. The service terminator session manager unit 908 also creates (step 1020) a first service terminator partner identity record 928 containing an identity of the DBN service manager unit 700 and a status of the DBN service manager unit 700. The status of the DBN service manager unit 700 includes, but is not limited to authenticated, unauthenticated, authenticating, available, unavailable, active, idle.

The service terminator unit 200 then, optionally, awaits (step 1022) a service invocation from a user, for example, the digital broadcast network subscriber. Upon detection of the service invocation, the service terminator unit 200 transmits (step 1024) a service invocation request message via the first RF unit 204 and the first antenna 208. The service invocation request message includes the service identifier, the identity of the DBN service manager unit 800, the identity of the service terminator service manager unit 700 and the security status of the service terminator unit 200. Optionally, the security status of the service terminator unit 200 can include an authentication response value received by the service terminator unit 200 from the digital broadcast network transmitter station 234.

Referring to Figure 15, the mobile terminal RF unit 332 and the second mobile terminal antenna 334 of the mobile terminal 106 awaits (step 1026) the service invocation request message. Upon receipt of the service invocation request message, the mobile terminal session manager unit 900 creates (step 1028) a first mobile terminal service record 930 with a mobile terminal service identifier. The mobile terminal service identifier is the same as, or different from but with a known correspondence to, the new service identifier created by the DBN session manager unit 916. The mobile terminal session manager unit 900 then creates (step 1030) a first mobile terminal partner identity record 932 and a second mobile terminal partner identity record 934, the first mobile terminal partner identity record 932 corresponding to the identity of the DBN service manager unit 800 and the second mobile terminal partner identity record 934 corresponding to the identity of the service terminator service manager unit 700. The mobile terminal 106 then sets up (step 1032) a data call into the cellular communication network service provider 112, the data call addressing the DBN service manager unit 800. Optionally, the address of the DBN service manager unit 800 can be the same as the identity of the DBN service manager unit 800. The mobile terminal 106 then transmits (step 1034), to the DBN service manager unit 800, a service identifier, the identity of the mobile terminal service manager unit 600, the identity of the service terminator service manager unit 700, the security status of the service terminator unit 200 and the security status of the mobile terminal 106. The service identifier is the same as or different, but with a known correspondence, to the new service identifier.

The above description assumes that the cellular communications system subscriber is already identified and authenticated by the mobile terminal security manager unit 902, and/or that the setting up of the data call to the cellular communication network service provider in step 1032 provides such identification and authentication of the cellular communication system subscriber, and therefore of the mobile terminal.

Referring to Figure 12, the DBN session manager unit 916 awaiting (step 1036) the service identifier, the identity of the mobile terminal service manager unit 600, the identity of the service terminator service manager unit 700, the security status of the service terminator unit 200 and the security status of the mobile terminal 106, creates (step 1038) a first DBN partner identity record 936 and a second DBN partner identity record 938. The first DBN partner identity record 930 corresponds to the identity of the service terminator service manager unit 700 and contains the security status of the service terminator service manager unit 700. The second DBN partner identity record 938 corresponds to the identity of the mobile terminal service manager unit 600 and contains the security status of the mobile terminal service manager unit 600. Optionally, the DBN security manager unit 918 authenticates the authentication response value, accompanying the security status of the service terminator unit 200, from the service terminator unit 200.

Referring to Figure 13, the DBN service manager unit 800 then instructs the digital broadcast network transmitter station 234 to broadcast (step 1040) the identity and security status of the mobile terminal service manager unit 600 to the service terminator unit 200.

Referring to Figure 14, the service terminator unit 200, awaiting (step 1042) the identity and security status of the mobile terminal service manager unit 600, creates (step 1044) a second service terminator partner identity record 940 upon receipt of the identity and security status of the mobile terminal 106 from the digital broadcast network transmitter station 234. The second service terminator partner identity record 940 contains the identity and the security status of the mobile terminal service manager unit 600. Referring to Figure 13, the DBN service manager unit 800 then broadcasts (step 1046) an information circuit activate command to the service terminator unit 200. The information circuit activate command comprises the new service identifier.

The service terminator unit 200, awaiting (Figure 14 - step 1048) the information circuit activate command, modifies (step 1050) an appropriate service terminator service record, in this example, the first service terminator service record 926 to the "active" state.

The DBN service manager unit 800 preferably then transmits (Figure 13 - step 1052) a Service Record Activate command to the mobile terminal 106 via the cellular communication network service provider 112. Alternatively, the Service Record Activate command can be transmitted via the service terminator unit 200 and the wireless LAN 201. The Service Record Activate command comprises the new service identifier. Referring to Figure 15, the mobile terminal 106, awaiting (step 1054) the Service Record Activate command, modifies an appropriate mobile terminal service record, in this example, the first mobile terminal service record 930 to the "active" state.

Once the digital broadcast network transmitter station 234 has authenticated the subscriber 200, the cellular communication network service provider 112 has authenticated the mobile terminal 106, and the first mobile terminal service record 930 and the first service terminator service record 926 are both in the active state, the new service can be delivered to the digital broadcast network subscriber via the I/O device 202.

In this context it should be particularly noted that it is not necessary for the digital broadcast network subscriber and the communication network subscriber to be the same, thus enabling a communication network subscriber to receive digital information services using service terminating hardware owned by another subscriber.

Optionally, the mobile terminal service manager unit 600 interrogates (step 1058) the service terminator service manager unit 700 via the mobile terminal RF unit 332 and the second mobile terminal antenna 334 and the second RF unit 206 and the second antenna 210. The interrogation of the service terminator service manager unit 700 ensures that the information circuit is complete. Upon confirmation of a complete information circuit, the mobile terminal service manager unit 600 reports (step 1060) a status of the information circuit to the DBN service manager unit 800.

If required, any billing for the new service can be carried out in relation to the subscription corresponding to the mobile terminal 106. Alternatively, the billing for the new service can be carried out in relation to a subscription of the digital broadcast network subscriber.

In another embodiment of the invention, much of the functionality of the terminal 106 in relation to the new service can be implemented as a Mobile Execution Environment (MExE) application downloadable from either the digital broadcast network transmitter station 234, the cellular communication network service provider 112 or the external server 266 depending upon whether the digital broadcast network transmitter station 234, the cellular communication network service provider 112 or the external server 266 is providing the new service.

In a further embodiment of the invention, an external server 266 provides another service to the digital broadcast network transmitter station 234. In an example of this embodiment, the information circuit is extended to include the external server 266, authentication of the mobile terminal 106 being carried out with respect to the external server 266 and authentication of the external server 266 being carried out with respect to the digital broadcast network transmitter station 234 in a similar manner to that already described above. Again, proprietary subscriber identification, authentication and user encryption algorithms can be associated with the external server 266. The external server 266 is coupled to the digital broadcast network transmitter station 234 and the cellular communication network service provider 112 directly. Alternatively, the external server 266, the digital broadcast network transmitter station 234, and the cellular communication network service provider 112 are coupled to the transit network 263.

Although the examples described above relate to the digital domain, it should be appreciated that the above examples can be implemented in the analog domain.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device.

## Claims

1. A management unit apparatus (600, 700, 800) for a first device (106, 200, 234, 258, 266), the first device being capable of operating in an information flow path of an information delivery system, the apparatus **characterised by** comprising:
record management means (900, 908, 916) for managing a service record (904, 912, 920) corresponding to a service available to a subscriber;
security management means (902, 910, 918) arranged to authenticate the first device; and
service management means (308, 212, 214) arranged to send service information relating to the available service and first device information to a partner device (106, 200, 234, 258, 266) in the information flow path of the information delivery system.

2. The management unit apparatus as claimed in claim 1, wherein the service management means is arranged to send service information and first device information to the partner device only if the first device is authenticated by the security management means.

3. The management unit apparatus as claimed in any preceding claim wherein a service record is created only if the first device is authenticated by the security management means.

4. The management unit apparatus as claimed in any preceding claim, wherein the first device is operable in a first communication system (112) forming part of the information flow path and the security management means (902, 910, 918) is arranged to authenticate the first device within the first communication system.

5. The management unit apparatus as claimed in any preceding claim wherein the security management means (902, 910, 918) is arranged to authenticate subscriber information associated with the first device.

6. The management unit apparatus as claimed in any preceding claim wherein the record management means (900, 908, 916) also manages a partner identity record (906, 914, 922) corresponding to a partner device.

7. The management unit apparatus as claimed in claim 6 wherein information corresponding to a first partner device recorded in the partner identity record is sent by the service management means to a second partner device in addition to the service information and first device information.

8. The management unit apparatus as claimed in any preceding claim, wherein service information sent by the service management means includes identity and status information relating to the available service.

9. The management unit apparatus as claimed in claim 8, wherein authentication response information is also sent by the service management means.

10. The management unit apparatus as claimed in any preceding claim, wherein in response to receipt from a partner device of partner device information associated with service information corresponding to an already existing service record, the record management means creates a partner identity record corresponding to the partner device.

11. The management unit apparatus as claimed in claim 10, wherein partner device information relating to the partner device is sent to at least one other partner device in the information flow path.

12. The management unit apparatus as claimed in any preceding claim, wherein the service management means is arranged to modify the service record to an active state for delivery of the available service once the information flow path has been established with authenticated devices.

13. The management unit (600, 700, 800) apparatus as claimed in any preceding claim, further comprising download means (112, 234) for downloading processing instructions to the first device (106, 200, 234, 258, 266).

14. A communication apparatus (106) comprising the management unit apparatus (600, 700, 800) as claimed in any preceding claim.

15. A satellite broadcast network (234) comprising the management unit apparatus as claimed in any of claims 1-13.

16. A cable broadcast network comprising the management unit apparatus as claimed in any of claims 1-13.

17. A method of enabling a first device (106, 200, 234, 258, 266) for operation in an information flow path of an information delivery system, the method **characterised by** comprising the steps in the first device of:
managing a service record (904, 912, 920) corresponding to a service available to a subscriber;
authenticating the first device; and
sending service information relating to the available service and first device information to a partner device (106,200,234,266) in the information flow path of the information delivery system.

18. The method as claimed in claim 17, wherein the step of sending service information and first device information to the partner device is carried out only if the first device is authenticated.

19. The method as claimed in one of claims 17 or 18 wherein a service record is created only if the first device is authenticated.

20. The method as claimed in one of claims 17-19, wherein the first device is operable in a first communication system (112) forming part of the information flow path and the first device is authenticated for operation within the first communication system.

21. The method as claimed in one of claims 17-20 wherein subscriber information associated with the first device is authenticated.

22. The method as claimed in one of claims 17-21 further comprising the step of managing a partner identity record (906, 914, 922) corresponding to a partner device.

23. The method as claimed in claim 22 further comprising the step of sending information corresponding to a first partner device recorded in the partner identity record (906, 914, 922) to a second partner device in addition to the service information and first device information.

24. The method as claimed in one of claims 17-23, wherein service information sent by the service management means includes identity and status information relating to the available service.

25. The method as claimed in claim 24, further comprising sending an authentication response with the service information and device information to a partner device.

26. The method as claimed in one of claims 17-25, further comprising in response to receipt from a partner device of partner device information associated with service information corresponding to an already existing service record, the step of creating a partner identity record corresponding to the partner device.

27. The method as claimed in one of claims 17-26, further comprising sending partner device information relating to a partner device to at least one other partner device in the information flow path.

28. The method as claimed in one of claims 17-27, further comprising modifying the service record to an active state in all partner devices in the information flow path for delivery of the available service once the information flow path has been established with authenticated devices.

29. The method as claimed in one of claims 17-28, further comprising the step of downloading processing instructions to the first device.

30. A program element comprising program code means to execute the method as claimed in any one of Claims 17 to 29.

31. A program element as claimed in Claim 30, embodied on a computer readable medium.

## Patentansprüche

1. Ein Verwaltungseinheit-Apparat (600, 700, 800) für ein erstes Gerät (106, 200, 234, 258, 266), die erste Einrichtung in der Lage ist in einem I nformations-Flusspfad eines I nformationsliefersystem arbeitet, wobei die Gerät gekennzeichnet ist, zu umfassen:
Datenbank-Management-Mittel (900, 908, 916) zur Verwaltung eines Service-Datensatzes (904, 912, 920), der einem einem Teilnehmer zur Verfügung stehenden Dienst entspricht;
Sicherheitsverwaltungs-Mittel (902, 910, 918) angeordnet, um das erste Gerät zu authentifizieren; und
Dienstverwaltungs-Mittel (308, 212, 214) angeordnet, Service-Informationen in Bezug auf verfügbare Diensten und erste Geräteinformationen zu einem Partnergerät (106, 200, 234, 258, 266) in dem I nformations-Flusspfad des I nformationsliefersystem zu senden.

2. Der Verwaltungseinheit-Apparat nach Anspruch 1, wobei die Dienstverwaltungseinrichtung eingerichtet ist, Dienstinformationen und erste Geräteinformationen an das Partnergerät nur zu senden, wenn die erste Einrichtung durch die Sicherheitsverwaltungs-Mittel authentifiziert ist.

3. Der Verwaltungseinheit-Apparat nach einem der vorhergehenden Ansprüche, bei dem ein Service-Datensatz nur dann erstellt wird, wenn die erste Einrichtung durch die Sicherheitsmanagement-Mittel authentifiziert ist.

4. Der Verwaltungseinheit-Apparat nach der vorhergehenden Anspruch, wobei das erste Gerät in einem ersten Kommunikationssystem (112) betriebsfähig ist, das Teil des Informations-Flusspfades und dem Sicherheitsverwaltungs-Mittel (902, 910, 918) ist, angeordnet zum Authentifizieren des ersten Geräts innerhalb des ersten Kommunikationssystems.

5. Der Verwaltungseinheit-Apparat nach einem der vorhergehenden Ansprüche, wobei die Sicherheitsverwaltungs-Mittel (902, 910, 918) angeordnet sind, dem ersten Gerät zugeordnete Teilnehmerinformation zu authentifizieren.

6. Der Verwaltungseinheit-Apparat nach einem der vorhergehenden Ansprüche, wobei die Datensatz-Verwaltungsmittel (900, 908, 916) auch eine einem Partnergerät entsprechende Datensatz-Partner-Identität verwaltet (906, 914, 922).

7. Der Verwaltungseinheit-Apparat beansprucht in Anspruch 6, wobei einem ersten Partnergerät entsprechende, in der Datensatz-Partner-Identität erfasste Information durch die Dienstverwaltungs-Mittel zu einem zweiten Partnergerät zusätzlich zu den Service-I nformationen und den ersten Geräteinformationen gesendet wird.

8. Der Verwaltungseinheit-Apparat nach einem der vorhergehenden Ansprüche, wobei von dem Dienstverwaltungs-Mittel gesendete Dienstinformation sich auf den verfügbaren Dienst beziehende Identität und Statusinformationen umfassen.

9. Der Verwaltungseinheit-Apparat nach Anspruch 8, bei dem Authentifizierungsantwort-I n-formation auch durch die Dienstverwaltungs-Mittel gesendet wird.

10. Der Verwaltungseinheit-Apparat nach einem der vorhergehenden Ansprüche, bei dem in Reaktion auf den Empfang von Partner-Geräteinformationen im Zusammenhang mit Dienst-I nformationen zu einem bereits bestehenden Dienst-Datensatz entsprechen von einem Partnergerät, die Datensatzverwaltungs-Mittel einen Partner-Identitäts-Datensatz zu dem Partnergerät erzeugen.

11. Der Verwaltungseinheit-Apparat wie in Anspruch 10 beansprucht, wobei Partnergerät-Informationen zum Partnergerät zu mindestens einem anderen Partnergerät in dem I nformations-Flusspfad gesendet wird.

12. Der Verwaltungseinheit-Apparat nach einem der vorhergehenden Ansprüche, wobei die Dienstverwaltungs-Mittel eingerichtet sind, den Dienst-Datensatz in einen aktiven Zustand für die Abgabe der verfügbaren Dienst zu ändern, sobald der I nformations-Flusspfad mit authentifizierten Geräten etabliert worden ist.

13. Der Verwaltungseinheit-Apparat (600, 700, 800) nach einem der vorhergehenden Ansprüche, der weiterhin Mittel zum Herunterladen (112, 234) umfasst zum Herunterladen von Verarbeitungsanweisungen an das erste Gerät (106, 200, 234, 258, 266).

14. Ein Kommunikations-Apparat (106), umfassend den Verwaltungseinheit-Apparat (600, 700, 800) nach einem der vorhergehenden Ansprüche.

15. Ein Satelliten-Rundfunk-Netzwerk (234), umfassend den Verwaltungseinheit-Apparat (600, 700, 800) nach einem der Ansprüche 1-13.

16. Ein Kabelrundfunknetzwerk, umfassend den Verwaltungseinheit-Apparat (600, 700, 800) nach einem der Ansprüche 1-13.

17. Ein Verfahren, um einem ersten Gerät (106, 200, 234, 258, 266) den Betrieb in einem Informations-Flusspfad eines Informationsliefersystems zu ermöglichen, wobei das Verfahren **dadurch gekennzeichnet** ist, die Schritte in der ersten Gerät zu umfassen:
Verwalten eines Dienst-Datensatzes (904, 912, 920) zu einem Dienst, der einem Teilnehmer zur Verfügung steht;
Authentifizieren des ersten Geräts; und Senden von Dienstinformation über den verfügbaren Dienst und Informationen zum ersten Gerät an ein Partnergerät (106, 200, 234, 266) in dem I nformations-Flusspfad des Informationsübermittlungssystems.

18. Das Verfahren nach Anspruch 17, wobei der Schritt des Dienstinformationen und erste Geräteinformationen an das Partnergerät zu senden nur erfolgt, wenn das erste Gerät authentifiziert ist.

19. Das Verfahren nach einem der Ansprüche 17 oder 18, wobei ein Dienst-Datensatz nur erstellt wird, wenn das erste Gerät authentifiziert ist.

20. Das Verfahren nach einem der Ansprüche 17-19, wobei das erste Gerät in einem ersten Kommunikationssystem (112) betreibbar ist, das einen Teil des Informations-Flusspfades bildet und das erste Gerät in dem ersten Kommunikationssystem authentifiziert wird.

21. Das Verfahren nach einem der Ansprüche 17-20, wobei dem ersten Gerät zugeordnete Teilnehmerinformation authentifiziert wird.

22. Das Verfahren nach einem der Ansprüche 17-21, das des Weiteren den Schritt der Verwaltung eines Partner-Identitäts-Datensatzes umfasst (906, 914, 922), der einem Partnergerät entspricht.

23. Das Verfahren nach Anspruch 22, das des Weiteren den Schritt umfasst, Information zu einem dem ersten Partnergerät zugeordneten Partner-Identitäts-Datensatz (906, 914, 922) an ein zweites Partnergerät zu senden zusätzlich zu der Serviceinformation und der erste Geräte-Informationen.

24. Das Verfahren nach einem der Ansprüche 17-23, wobei von dem Dienstverwaltungs-Mittel gesendete Dienstinformation Identität und Statusinformationen zu dem verfügbaren Dienst umfasst.

25. Das Verfahren wie in Anspruch 24 beansprucht, ferner umfassend ein Senden einer Authentifizierungsantwort mit der Dienstinformationen und der Geräteinformation an ein Partnergerät.

26. Das Verfahren, wie weiter in einem der Ansprüche 17-25 beansprucht, ferner umfassend in Reaktion auf den Empfang von einem Partnergerät die Partnergeräteinformation zu DienstInformation zu einem bereits bestehenden Dienst-Datensatz, den Schritt des Erstellens eines Partner-Identitäts-Datensatzes zu dem Partnergerät.

27. Das Verfahren, wie weiter in einem der Ansprüche 17-26 beansprucht, ferner umfassend ein Senden von Partnergeräte-Information bezogen auf mindestens ein anderes Partnergerät in dem I nformations-Flusspfad.

28. Das Verfahren, wie weiter in einem der Ansprüche 17-27 beansprucht, umfassend den ein Verändern des Dienst-Datensatzes in einen aktiven Zustand in allen Geräten in dem I nformations-Flusspfad für die Lieferung des verfügbaren Dienstes, sobald der in dem Informations-Flusspfad mit authentifizierten Geräten hergestellt wurde.

29. Das Verfahren, wie in einem der Ansprüche 17-28 beansprucht, ferner umfassend den Schritt Verarbeitungsbefehle an das erste Gerät herunterzuladen.

30. Ein Programmelement umfassend Programmcodemittel zur Durchführung des Verfahrens nach einem der Ansprüche 17 bis 29.

31. Ein Programelement nach Anspruch 30, auf einem computerlesbaren Medium verkörpert.

## Revendications

1. Appareil d'une unité de gestion (600, 700, 800) pour un premier dispositif (106, 200, 234, 258, 266), le premier dispositif étant apte à fonctionner dans un chemin de flux d'informations d'un système de distribution d'informations, l'appareil étant **caractérisé en ce qu'**il comprend :
un moyen de gestion de fiches (900, 908, 916) pour la gestion d'une fiche de service (904, 912, 920) correspondant à un service offert à un abonné ;
un moyen de gestion de sécurité (902, 910, 918) conçu pour authentifier le premier dispositif ; et
un moyen de gestion de service (308, 212, 214) conçu pour envoyer des informations de service concernant le service offert et des informations du premier dispositif à un dispositif partenaire (106, 200, 234, 258, 266) dans le chemin de flux d'informations du système de distribution d'informations.

2. Appareil d'unité de gestion selon la revendication 1, dans lequel le moyen de gestion de service est conçu pour envoyer des informations de service et des informations du premier dispositif au dispositif partenaire uniquement si le premier dispositif est authentifié par le moyen de gestion de sécurité.

3. Appareil d'unité de gestion selon l'une quelconque des revendications précédentes, dans lequel une fiche de service est créée uniquement si le premier dispositif est authentifié par le moyen de gestion de sécurité.

4. Appareil d'unité de gestion selon l'une quelconque des revendications précédentes, dans lequel le premier dispositif est utilisable dans un premier système de communication (112) faisant partie du chemin de flux d'informations et le moyen de gestion de sécurité (902, 910, 918) est conçu pour authentifier le premier dispositif dans le premier système de communication.

5. Appareil d'unité de gestion selon l'une quelconque des revendications précédentes, dans lequel le moyen de gestion de sécurité (902, 910, 918) est conçu pour authentifier les informations d'abonné associées au premier dispositif.

6. Appareil d'unité de gestion selon l'une quelconque des revendications précédentes, dans lequel le moyen de gestion des fiches (900, 908, 916) gère également une fiche d'identité de partenaire (906, 914, 922) correspondant à un dispositif partenaire.

7. Appareil d'unité de gestion selon la revendication 6, dans lequel des informations correspondant à un premier dispositif partenaire enregistré dans la fiche d'identité de partenaire sont envoyées par le moyen de gestion de service à un deuxième dispositif partenaire, en plus des informations du service et des informations du premier dispositif.

8. Appareil d'unité de gestion selon l'une quelconque des revendications précédentes, dans lequel les informations de service envoyées par le moyen de gestion de service incluent des informations d'identité et d'état relatives au service disponible.

9. Appareil d'unité de gestion selon la revendication 8, dans lequel les informations de réponse d'authentification sont également envoyées par le moyen de gestion de service.

10. Appareil d'unité de gestion selon l'une quelconque des revendications précédentes, dans lequel, en réponse à la réception de la part d'un dispositif partenaire des informations de dispositif partenaire associées à des informations de service correspondant à une fiche de service déjà existante, le moyen de gestion de fiches crée une fiche d'identité de partenaire correspondant au dispositif partenaire.

11. Appareil d'unité de gestion selon la revendication 10, dans lequel les informations de dispositif partenaire relatives au dispositif partenaire sont envoyées à au moins un autre dispositif partenaire dans le chemin de flux d'informations.

12. Appareil d'unité de gestion selon l'une quelconque des revendications précédentes, dans lequel le moyen de gestion de service est conçu pour faire passer la fiche de service à un état actif pour la distribution du service disponible une fois que le chemin de flux d'informations a été établi avec des dispositifs authentifiés.

13. Appareil d'unité de gestion (600, 700, 800) selon l'une quelconque des revendications précédentes, comprenant en outre un moyen de téléchargement (112, 234) pour le téléchargement d'instructions de traitement au premier dispositif (106, 200, 234, 258, 266).

14. Appareil de communication (106) comprenant l'appareil d'unité de gestion (600, 700, 800) selon l'une quelconque des revendications précédentes.

15. Réseau de diffusion par satellite (234) comprenant l'appareil d'unité de gestion selon l'une quelconque des revendications 1 à 13.

16. Réseau de diffusion par câble comprenant l'appareil d'unité de gestion selon l'une quelconque des revendications 1 à 13.

17. Procédé pour permettre le fonctionnement d'un premier dispositif (106, 200, 234, 258, 266) dans un chemin de flux d'informations d'un système de distribution d'informations, le procédé étant **caractérisé en ce qu'**il comprend les étapes dans le premier dispositif consistant en :
la gestion d'un dossier de service (904, 912, 920) correspondant à un service disponible pour un abonné ;
l'authentification du premier dispositif ; et
l'envoi d'informations de service relatives au service disponible et des informations d'un premier dispositif à un dispositif partenaire (106, 200, 234, 266) dans le chemin de flux d'informations du système de distributions d'informations.

18. Procédé selon la revendication 17, dans lequel l'étape consistant à envoyer des informations de service et des informations d'un premier dispositif au dispositif partenaire est effectuée uniquement si le premier dispositif est authentifié.

19. Procédé selon l'une quelconque des revendications 17 ou 18, dans lequel une fiche de service est créée uniquement si le premier dispositif est authentifié.

20. Procédé selon l'une quelconque des revendications 17 à 19, dans lequel le premier dispositif est utilisable dans un premier système de communication (112) faisant partie du chemin de flux d'informations et le premier dispositif est authentifié pour fonctionner dans le premier système de communication.

21. Procédé selon l'une quelconque des revendications 17 à 20, dans lequel des informations d'abonné associées au premier dispositif sont authentifiées.

22. Procédé selon l'une quelconque des revendications 17 à 21, comprenant en outre l'étape consistant à gérer une fiche d'identité de partenaire (906, 914, 922) correspondant à un dispositif partenaire.

23. Procédé selon la revendication 22, comprenant en outre l'étape consistant à envoyer des informations correspondant à un premier dispositif partenaire inscrit dans la fiche d'identité de partenaire (906, 914, 922) à un second dispositif partenaire, en plus des informations de service et des informations du premier dispositif.

24. Procédé selon l'une quelconque des revendications 17 à 23, dans lequel les informations de service envoyées par le moyen de gestion de service incluent des informations d'identité et d'état relatives au service disponible.

25. Procédé selon la revendication 24, comprenant en outre l'envoi d'une réponse d'authentification avec les informations de service et les informations de dispositif à un dispositif partenaire.

26. Procédé selon l'une des revendications 17 à 25, comprenant en outre, en réponse à la réception de la part d'un dispositif partenaire d'informations de dispositif partenaire associées à des informations de service correspondant à une fiche de service déjà existante, l'étape de création d'une fiche d'identité de partenaire correspondant au dispositif partenaire.

27. Procédé selon l'une quelconque des revendications 17 à 26, comprenant en outre l'envoi d'informations de dispositif partenaire se rapportant à un dispositif partenaire à au moins un autre dispositif partenaire dans le chemin de flux d'informations.

28. Procédé selon l'une quelconque des revendications 17 à 27, comprenant en outre le passage de la fiche de service à un état actif dans tous les dispositifs partenaires dans le chemin de flux d'informations pour la distribution du service disponible une fois que le chemin de flux d'informations a été établi avec des dispositifs authentifiés.

29. Procédé selon l'une quelconque des revendications 17 à 28, comprenant en outre l'étape consistant à télécharger des instructions de traitement sur le premier dispositif.

30. Élément de programme comprenant un moyen de code de programme servant à exécuter le procédé selon l'une quelconque des revendications 17 à 29.

31. Élément de programme selon la revendication 30, incorporé sur un support lisible par ordinateur.
